# EUROPÄISCHE PATENTSCHRIFT

(11) **EP 4 032 392 B1**
(45) Veröffentlichungstag und Bekanntmachung des Hinweises auf die Patenterteilung: **16.04.2025**
(21) Anmeldenummer: 22152258.4
(22) Anmeldetag: 19.01.2022
(51) Int. Cl.: A01D 46/28

(54) **ERNTEEINRICHTUNG**
HARVESTING DEVICE
DISPOSITIF DE RÉCOLTE

(30) Priorität: 22.01.2021 DE 102021101421
(43) Veröffentlichungstag der Anmeldung: 27.07.2022
(73) Patentinhaber: ERO GmbH, 55469 Simmern (DE)
(72) Erfinder: BITTNER, Stefan, 55411 BINGEN (DE); WAGNER, Jens, 53175 BONN (DE); SCHÜLER, Hartmut, 56291 BADENHARD (DE); HARTARD, Torben, 67489 KIRRWEILER (DE); GAUER, Christopher, 55471 SARGENROTH (DE)
(74) Vertreter: Cabinet Nuss

(56) Entgegenhaltungen:
- EP-A1- 1 320 291
- FR-A1- 2 862 481
- US-A1- 2007 107 408
- US-A1- 2010 024 374

## Beschreibung

Die Erfindung betrifft eine an einem Fahrzeug angeordnete Ernteeinrichtung für Früchte tragende Pflanzen, insbesondere für Reben in Reihen gepflanzter Rebstöcke, wobei die Ernteeinrichtung in Fahrt- und Arbeitsrichtung entlang der die Früchte tragenden Pflanzen verfahrbar ausgebildet ist und mehrere parallel zur Fahrtrichtung sich im Wesentlichen horizontal erstreckende und beabstandet übereinander angeordnete Schüttelstäbe aufweist. Die Schüttelstäbe sind jeweils an einem ersten Ende drehfest mit einem Antriebselement verbunden, welches seinerseits drehbar um seine Längsachse in der Ernteeinrichtung gelagert ist und sich in der Vertikalen entlang mehrerer Schüttelstäbe erstreckt. Das Antriebselement ist in einer über einen bestimmtem Winkelbereich oszillierenden Drehbewegung um seine Längsachse antreibbar, wodurch die mit dem Antriebselement drehfest verbundenen Schüttelstäbe in einer horizontalen Ebene und quer zu ihrer Längserstreckung eine auf die Pflanze gerichtete hin- und hergehende Schüttelbewegung ausführen.

Im Stand der Technik sind verschiedene Erntemaschinen bekannt, die mit Hilfe von Schüttelbauteilen auf Pflanzen einwirken und dadurch die Früchte von den Pflanzen trennen sollen.

Die EP 0 267 829 A1 offenbart eine Erntemaschine für Früchte, die in Reihen oder Linien gepflanzt sind, wobei die Erntemaschine ein die jeweilige Pflanzenreihe übergreifendes Portal-Fahrwerk aufweist, welches innenseitig ein Gestell mit einander gegenüberliegenden Anordnungen von horizontal ausgerichteten länglichen Schüttelstäben aufweist. Die elastischen Schüttelstäbe der jeweiligen Anordnung befinden sich links und rechts einer Pflanzenreihe, liegen in bzw. parallel zu einer Längsrichtung der Erntemaschine beabstandet übereinander, sind jeweils an ihren Enden im Gestell befestigt und führen eine auf die Pflanze gerichtete hin- und hergehende Schüttelbewegung quer zur Fahrtrichtung aus.

An seinem in Fahrtrichtung vorderen Ende ist der jeweilige Schüttelstab dazu an einem im Gestell vorgesehenen Schüttelantrieb befestigt. Am hinteren Ende ist der Schüttelstab mittels einer beweglichen Lagerschwinge am Gestell angelenkt. Zur Erzeugung einer Schüttelbewegung besteht der Schüttelantrieb aus einer im Gestell drehbar gelagerten vertikalen Stange, die eine über einen bestimmtem Winkelbereich oszillierende Drehbewegung ausführt. Durch eine drehfeste Verbindung zwischen dem vorderen Ende des jeweiligen Schüttelstabs und der vertikalen Stange führt deren oszillierende Drehbewegung dazu, dass der Schüttelstab im Elastizitätsbereich peitschenförmig in Richtung auf die Pflanze ausgebogen und wieder in seine Ausgangslage zurückgeführt wird. Die Pflanze wird damit je nach Ausschlag und Frequenz der Drehbewegung durch die Ausbiegungen der Schüttelstäbe mehr oder weniger stark geschüttelt. Die gegenüberliegenden Schüttelstäbe sind dabei antriebsseitig so miteinander gekoppelt, dass bei einer maximalen Auslenkung oder Ausbiegung eines Schüttelstabs sein gegenüberliegendes Pendant eine minimale Auslenkung oder Biegung erfährt.

Sollen empfindliche Früchte mit solchen Erntemaschinen geerntet werden, etwa Trauben oder Weinreben, so ist es wesentlich, dass die Stärke des Schüttelns, also die Stärke der Einwirkung der Schüttelbauteile auf die Pflanzen variiert werden kann, beispielsweise dadurch, dass die Frequenz, Anzahl und die Amplitude der Schwingungen der Stäbe einstellbar sind. Darüber hinaus ist es gewünscht, dass die Größe des beaufschlagten Pflanzenbereichs bzw. dass die Größe des Arbeitsbereichs der Schüttelbauteile verändert werden kann. Dazu muss die Einwirkung der Schüttelstäbe begrenzt werden, etwa dadurch, dass ihr Arbeitsbereich in seiner Höhe eingestellt werden kann. Damit können dann auch z. B. klein wachsende Pflanzen oder auch nur Teile von Pflanzen geschüttelt werden. Eine Möglichkeit besteht darin, dass nicht immer alle Schüttelbauteile über die gesamte Höhe des Arbeitsbereichs der Erntemaschine angetrieben werden. Im Stand der Technik existieren dazu Lösungen, mit deren Hilfe einzelne Schüttelstäbe von ihrem Antrieb getrennt werden und frei laufen können oder nur leicht mitschwingen können, ohne selbst Kräfte auf die Pflanze auszuüben.

Dazu offenbart die EP 1 320 291 B1 eine Erntemaschine, bei der in einem Stelzrad-Fahrgestell in der genannten Art und Weise zwei gegenüberliegend angeordnete Sätze von Schüttelbauteilen bzw. Schüttelstäben vorgesehen sind, die aufeinander gerichtet zusammenwirken, um zwischen den Schüttelbauteilen durchlaufende Büsche/Pflanzen zu schütteln und so deren Früchte abzutrennen. Um die Bearbeitungshöhe des Arbeitsbereichs der Erntemaschine verändern, wird hier vorgeschlagen, die jeweiligen Schüttelbauteile bzw. Schüttelstäbe bzw. ihre jeweiligen Verbindungen zu den Antriebsstangen so zu gestalten, dass sie auf relativ einfache Weise von den Antriebsstangen gelöst werden können. Darüber hinaus sind reibungsvermindernde Einrichtungen an der Befestigung zwischen Antriebsstange und Schüttelstab vorgesehen. In der konstruktiven Gestaltung besteht die Verbindung zu den Antriebsstangen aus einfachen Schraubverbindungen, mit denen formschlüssig ineinandergreifende komplementäre Verbindungselemente gelöst werden können. So können ein oder mehrere Schüttelstäbe vom Antrieb getrennt werden und sich frei und reibungsgemindert um die Antriebsstange drehen. Die vom Antrieb getrennten Schüttelstäbe übertragen dann keine Schüttelbewegung mehr auf die Pflanze.

Nachteiligerweise ist es auch mit dieser relativ einfachen Verbindung zwischen Schüttelstab und Antriebselement oder Antriebsstange notwendig, bei einer Veränderung der Höhe des Arbeitsbereichs der Erntemaschine eine manuelle Tätigkeit zum Lösen der Schüttelstäbe auszuführen. Dazu ist Werkzeug erforderlich, die Maschine muss stillgesetzt werden, der Fahrer der Erntemaschine oder weiteres Bedienpersonal muss die Schraubverbindungen lösen oder wieder befestigen und sich schließlich vergewissern, dass alle Befestigungsmittel wieder eingesammelt und aufgeladen worden sind. Zwar ist damit eine Einstellmöglichkeit der Arbeitshöhe gegeben, jedoch ist die zugehörige Einstellung zeitaufwendig und umfangreich.

Die FR 2 862 481 A1 offenbart eine Fixierung von Schüttelstäben einer Erntemaschine durch eine Einspannung bzw. Klemmung, wobei die Schüttelstäbe durch kammartig ineinandergreifende Formplatten am Antriebselement fest eingespannt werden. Die Stäbe sind dabei in die kammartig ineinandergreifende Formplatten eingelegt oder eingesteckt. Die Spannung bzw. Klemmung der Formplatten oder Kämme gegeneinander erfolgt durch mehrere Zylinder.

Die Aufgabe der vorliegenden Erfindung bestand demnach in der Bereitstellung einer Erntemaschine mit angetriebenen Schüttelbauteilen, deren Arbeitshöhe, d.h. deren wirksamer Bereich der Einwirkung Schüttelbauteile auf die Pflanze in seiner Höhe einfach verändert werden kann. Damit soll die Möglichkeit geschaffen werden, eine Ernteeinrichtung / Erntemaschine innerhalb kürzester Zeit so umzustellen, dass auch klein wachsende Pflanzen oder auch nur Teile von Pflanzen geschüttelt werden können, ohne dass manuelle Tätigkeiten erforderlich sind, ohne zusätzliches Bedienpersonal und ohne aufwendige Einstellarbeiten im Betrieb. Der Aufwand bei der Veränderung des Arbeitsbereichs war dementsprechend zu verringern und eine Ernteeinrichtung mit möglichst einfach zu bedienenden Vorrichtungen zur Veränderung der Arbeitshöhe vorzusehen.

Gelöst wird diese Aufgabe durch die Merkmale des Hauptanspruchs. Weitere vorteilhafte Ausbildungen sind in den Unteransprüchen offenbart.

Dabei ist die drehfeste Verbindung zwischen Antriebselement und dem ersten Ende des jeweiligen Schüttelstabs als eine lösbare, mittels hydraulisch, elektromechanisch oder elektromagnetisch angetriebener Aktoren fernbetätigbare Verriegelung oder Blockade einer drehbaren Lagerung des Schüttelstabs um die Längsachse des Antriebselements ausgebildet, wobei durch die Verriegelung der Schüttelstab relativ zum Antriebselement fixierbar ist, also festgesetzt wird.

Die Verriegelung blockiert auf diese Weise die an sich drehbare Lagerung des Schüttelstabs um die Längsachse des Antriebselements so, dass aus einer drehbaren Lagerung eine drehfeste Verbindung zwischen Schüttelstab und Antriebselement entsteht, die auf eine solche Art festgesetzt und fixiert ist, dass Antriebskräfte oder Drehmomente vom Antriebselement auf den Schüttelstab übertragen werden.

Dadurch, dass die Verriegelung fernbetätigt verriegelbar und wieder lösbar ist, können auf einfachste Weise einzelne oder mehrere der Schüttelstäbe zur Anpassung der Arbeitshöhe oder Einwirkungsstärke zu- oder abgeschaltet werden, auch im laufenden Betrieb und beispielsweise vom Fahrersitz aus. Manuelle Tätigkeiten zum Lösen von Verschraubungen oder Befestigungselementen von Schüttelstäben entfallen, die Mitnahme von Werkzeug ist nicht erforderlich, die Maschine muss nicht komplett stillgesetzt werden und weiteres Bedienpersonal ist auch nicht nötig.

Fernbetätigbare hydraulisch, elektromechanisch oder elektromagnetisch angetriebene Aktoren sind zur Verriegelung der drehbaren Lagerung vorgesehen. Elektrische Energie, elektrisch betätigte Einrichtungen oder auch hydraulische Einrichtungen sind besonders einfach in Fahrzeugen zu integrieren. Entsprechende Aktoren wie Hydraulikzylinder, elektrische Linearantriebe oder linear wirkende Stellmotoren sind bei kleinster Bauweise in der Lage, große Stellkräfte zu übertragen.

Eine vorteilhafte Ausbildung besteht darin, dass die drehfeste Verbindung als eine mit Hilfe von Aktoren aktivierbare Verriegelung einer drehbar um die Längsachse des Antriebselements gelagerten und am antriebseitigen Ende des Schüttelstabs vorgesehenen Halteplatte ausgebildet ist, wobei durch die Verriegelung die Halteplatte und damit der mit ihr verbundene Schüttelstab relativ zum Antriebselement fixierbar sind. Damit wird die Herstellung und der Aufbau solcher Erntemaschinen dahingehend vereinfacht, dass Gleichteile - hier eine Halteplatte - für alle Arten und Ausführungen von Schüttelbauteilen vorgesehen sind und so die zugehörigen Anschluss- und Verriegelungsbauelemente auf eine einheitliche Halteplatte angepasst und für alle Ernteeinrichtungen gleich oder ähnlich ausgebildet werden können. So könnten beispielsweise statt einfachen Schüttelstäben auch fächerartig oder freischwingend ausgebildete Rüttelstäbe mit einem Haltelement versehen und in eine dazu angepasste erfindungsgemäße Erntemaschine eingebaut werden. Auch wird ein nach Verschleiß oder Beschädigung erforderlicher Austausch von Schüttelstäben vereinfacht.

Die weiteren vorteilhaften Ausbildungen der Erfindung lassen sich drei unterschiedlichen Prinzipien der konstruktiven Ausbildung der Verriegelung zuordnen, die der allgemeinen und gemeinsamen Erfindungsidee der Blockade einer an sich drehbeweglich vorgesehenen Lagerung folgen. So lässt sich in einer Ausführung die Halteplatte als solche einerseits durch einen Aktor antreiben und andererseits auch direkt mit dem Antriebselement in erfinderischer Weise verriegeln. In einer alternativen Ausführung ist aber auch eine Verriegelung zwischen Halteplatte und einem zusätzlichem angetriebenen Koppelelement vorgesehen, bei der das Koppelelement als solches die drehbare Lagerung der Halteplatte blockiert. Letztlich ist eine weitere Ausführung beansprucht, bei der auch ein nicht angetriebenes zusätzliches Koppelelement vorgesehen werden kann, welches lediglich die drehbare Lagerung der Halteplatte blockiert. Diese drei Wirkprinzipien finden sich in den folgenden vorteilhaften Ausbildungen der erfindungsgemäßen Lösung und führen alle zur Blockade und Verriegelung einer an sich drehbeweglich ausgebildeten Lagerung.

So besteht eine weitere vorteilhafte Ausbildung darin, dass ein so am Antriebselement angelenkter und auf die Halteplatte wirkender Aktor vorgesehen ist, dass die Halteplatte in eine ihre drehbare Lagerung blockierende Verriegelungsposition schwenkbar und dort fixierbar ist, vorzugsweise in einen Formschluss und Kraftschluss zwischen Halteplatte und Antriebselement schwenkbar ist. Der Formschluss kann dabei durch entsprechende Formgebung von Teilen der Halteplatte und Teilen des Antriebselements ausgebildet werden. Zusätzlich kann natürlich auch eine lösbare eine Rast- oder Schnappfunktion zwischen Halteplatte und Antriebselements vorgesehen sein.

Eine solche Lösung mit einem direkt auf die Halteplatte wirkenden und dieselbe fixierenden Aktor stellt eine sehr einfache Ausbildung der Erfindung dar und lässt sich insbesondere durch eine weitere vorteilhafte Ausbildung realisieren, die darin besteht, dass der Aktor als ein am Antriebselement angelenkter Hydraulikzylinder ausgebildet ist, durch dessen Kolben die Halteplatte in eine ihre drehbare Lagerung blockierende Verriegelungsposition schwenkbar ist.

Solche Hydraulikzylinder übertragen bei geringer Baugröße sehr hohe Kräfte und können somit nicht nur für das Verschwenken der Halteplatte in eine Verriegelungsposition genutzt werden, sondern gleichzeitig durch die hohen übertragbaren Kräfte auch für die kraftschlüssige Verriegelung und Fixierung als solche.

Natürlich sind auch andere, direkt auf die Halteplatte wirkende und diese letztlich verriegelnde linear wirkende Antriebe möglich.

Eine weitere und damit dem zweiten Wirkprinzip folgende vorteilhafte Ausbildung besteht darin, dass ein einerseits am Antriebselement und andererseits an einem ersten Ende eines Koppelglieds angelenkter Aktor vorgesehen ist, wobei das Koppelglied an seinem zweiten Ende ebenfalls am Antriebselement angelenkt und durch den Aktor in eine die drehbare Lagerung der Halteplatte blockierende und die Halteplatte fixierende Verriegelungsposition schwenkbar ist, vorzugsweise in einen mindestens bereichsweisen Formschluss und/oder Kraftschluss zwischen Halteplatte und Koppelglied. Es entsteht durch das Koppelglied und den in seiner Länge variablen Aktor in Verbindung mit ihren Anlenkungen am Antriebselement eine Art Koppelgetriebe. Durch die erfindungsgemäße Ausführung mit einem Koppelglied lassen sich Hebelübersetzungen nutzen, um auch mit relativ niedrigen Kräften die Halteplatte so in ihrer Drehbarkeit gegenüber dem Antriebselement zu verriegeln und zu blockieren, dass zwischen Halteplatte und Antriebselement eine Übertragung von Antriebskräften ermöglicht wird.

Eine weitere vorteilhafte Ausbildung besteht darin, dass der Aktor als ein am Antriebselement angelenkter und linear auf das Koppelglied wirkender Motor ausgebildet ist, wodurch das Koppelglied in die Verriegelungsposition schwenkbar ist. Die lineare Wirkung kann bspw. durch eine von dem Motor angetriebene Gewindestange erzielt werden, wenngleich andere grundsätzlich bekannte Ausführungen ebenfalls eine lineare Wirkung erzielen können. Elektrisch angetriebene linear wirkende Motoren sind eine sehr preiswerte Alternative zu Hydraulikzylindern und erfordern kein zusätzliches Versorgungssystem mit Hydrauliköl. Das bietet Vorteile bezüglich der Umweltverträglichkeit. Natürlich sind jegliche anderen Ausbildungen von elektrischen Stellmotoren ebenfalls möglich.

Eine weitere vorteilhafte Ausbildung besteht darin, dass der Aktor und Koppelglied ein Koppelgetriebe bilden und die Verriegelungsposition durch eine über den Aktor druckbelastete Anlage des Koppelglieds an der Halteplatte erzeugbar ist, z.B. Teilflächen des Koppelglieds oder einer mit dem Koppelglied verbundenen Gelenkverbindung und der Halteplatte aneinander liegen. Hierdurch lässt sich mit einer relativ geringen Druckkraft durch den Aktor und einer entsprechend ausgebildeten Anlenkung von Koppelglied, Aktor und Halteplatte ein Art Selbsthemmung erzeugen, die eine effektive Verriegelung der Halteplatte bildet und verhindert, dass die Halteplatte sich durch Antriebskräfte aus der Fixierung lösen kann.

Eine weitere vorteilhafte Ausbildung besteht darin, dass ein an seinem ersten Ende an der Halteplatte angelenktes, in Richtung auf das Antriebselement schwenkbares und an seinem zweiten Ende am Antriebselement in einer Verriegelungsposition fixierbares Koppelglied vorgesehen ist, wobei in der Verriegelungsposition des Koppelglieds die drehbare Lagerung der Halteplatte blockierbar und die Halteplatte so fixierbar ist. Hier wird das dritte Wirkprinzip realisiert, bei dem ein zusätzliches Koppelelement die drehbare Lagerung der Halteplatte blockiert. Das Koppelelement ist hier nicht angetrieben ausgebildet, kann aber auch als angetriebenes Koppelelement ausgeführt werden. Wesentlich ist bei dieser Ausführung, dass eine sehr einfach aufgebaute Möglichkeit der fernbetätigbaren Verriegelung realisiert wird, indem lediglich eine sehr sichere Verriegelung und Blockade der Drehbewegung der Halteplatte bereitgestellt wird. Das Anfahren der Verriegelungsposition bei nicht angetriebenem Koppelelement kann dabei in beliebiger Weise durchgeführt werden kann, beispielsweise durch Kurvenführungen an der Ernteeinrichtung.

Eine vorteilhafte Ausbildung einer derartigen Verriegelung oder Blockade durch ein Koppelelement besteht darin, dass das Koppelglied in der Verriegelungsposition durch ein in das Koppelglied eingreifendes Rast- oder Haltelement fixierbar ist, welches durch einen am Antriebselement angeordneten Aktor betätigbar ist. Dies wird dann besonders vorteilhaft und auf eine einfache Weise realisiert, wenn das Rast- oder Haltelement als ein durch den Zug- oder Druckanker eines am Antriebselement angeordneten Elektromagneten betätigbarer, in das Koppelglied eingreifender Rastbolzen ausgebildet ist.

Dabei ist es möglich, dass einfache Standardbauteile, wie etwa Zug- oder Druckankermagneten kleinerer Bauweise am Antriebselement angeordnet sein können, die nicht unbedingt eine erforderliche Schwenkbewegung der Halteplatte und damit der Schüttelstange bewirken müssen, sondern nur einen Rastbolzen in eine Stellung treiben, welche die Verriegelungsposition fixiert.

Eine weitere vorteilhafte Ausbildung besteht darin, dass das in der Ernteeinrichtung gelagerte Antriebselement als ein im Wesentlichen sich über die Höhe der Ernteeinrichtung und über alle Schüttelstäbe erstreckendes längliches Profil ausgebildet und an einem Ende über einen Koppelhebel oder Pleuel mit einem Exzenterantrieb über einen bestimmtem Winkelbereich in einer oszillierenden Dreh- oder Schwenkbewegung antreibbar ist. Hierdurch wird ein einfacher und sicherer Antrieb für eine oszillierende Bewegung bereitgestellt, der mit Standardbauteilen realisiert werden kann.

Eine weitere vorteilhafte Ausbildung besteht darin, dass die Schüttelstäbe elastisch und biegsam ausgebildet und beidseitig der Ernteeinrichtung gelagert sind, wobei das dem Antriebselement gegenüberliegende Stabende über ein Koppelglied bzw. eine Koppelstange in Form eines beweglichen Lenkers in der Ernteeinrichtung gelagert ist. Durch ein solches auch als "Lagerschwinge" bezeichnetes Koppelglied am nicht angetriebenen Ende des Schüttelstabs erhält man in Verbindung mit der Halteplatte und dem Schüttelstab eine Konstruktion, welche durch entsprechende Auslegung ihrer Abmessungen und Stab-Elastizitäten eine Voreinstellung der Amplitude der Stabschwingungen erlaubt. Die Lagerschwinge kann dazu beispielsweise auch längenvariabel ausgeführt werden.

Eine weitere vorteilhafte Ausbildung besteht darin, dass das Antriebselement am in Fahrtrichtung oder Arbeitsrichtung vorderen Ende der Ernteeinrichtung in letzterer drehbar gelagert ist. Bei den hier zu betrachtenden Ernteeinrichtungen in Fahrzeugen mit Portalfahrwerk befindet sich deren Antrieb, die Fahrerkabine und auch der Schwerpunkt oft im vorderen Teil des Fahrzeugs. Die Anordnung auch des Antriebselements am in Fahrtrichtung oder Arbeitsrichtung vorderen Ende der Ernteeinrichtung, also nahe des Fahrzeugschwerpunkts, vermeidet stärkere Schwingung in der Ernteeinrichtung.

Eine weitere vorteilhafte Ausbildung besteht darin, dass die Ernteeinrichtung und das Fahrwerk des aufnehmenden Fahrzeugs in Form eines die jeweilig zu bearbeitende Pflanzenreihe übergreifenden Portals ausgebildet sind und die Ernteeinrichtung derart mit einander gegenüberliegenden Anordnungen von horizontal ausgerichteten länglichen Schüttelstäben versehen ist, das letztere sich links und rechts einer Pflanzenreihe befinden und eine auf die Pflanzen gerichtete hin- und hergehende horizontale Schüttelbewegung quer zur Fahrtrichtung ausführen, also in einer Horizontal- bzw. Transversalebene, deren Normale durch die Hochachse der Ernteeinrichtung gebildet wird. Eine derartige beidseitige Bearbeitung der Pflanze führt auch bei geringeren Amplituden der Schüttelbewegung zu sehr guten Ernteergebnissen.

### Ausführungsbeispiel / Detaillierte Beschreibung der Erfindung

Anhand eines Ausführungsbeispiels soll die Erfindung näher erläutert werden. Es zeigen
- Fig. 1a, 1b: ein landwirtschaftliches Fahrzeug mit einer erfindungsgemäßen Ernteeinrichtung,
- Fig. 2: die Ernteeinrichtung gemäß Fig. 1 mit zwei links und rechts einer Symmetrieachse sich parallel zur Fahrtrichtung erstreckenden Schüttelvorrichtungen, deren sämtliche Schüttelstäbe verriegelt sind,
- Fig. 3: die Ernteeinrichtung gemäß Fig. 2, jedoch mit Schüttelvorrichtungen, bei denen die zwei oberen Schüttelstäbe entriegelt/gelöst sind,
- Fig. 4: eine Aufsicht auf die Ernteeinrichtung gemäß Fig. 2, bei der die gegenüberliegenden Schüttelstäbe in den durch das Verriegeln bzw. Lösen ihrer Lagerungen am Antriebselement erzeugten unterschiedlichen Positionen dargestellt sind,
- Fig. 5: eine generelle Aufsicht auf einen Schüttelstab der Ernteeinrichtung mit einer durch einen hydraulisch angetriebenen Aktor verriegelten Lagerung,
- Fig. 6: einen Ausschnitt aus der Fig. 5 in einer vergrößerten Darstellung der Verriegelungsposition,
- Fig. 7: eine generelle Aufsicht auf einen Schüttelstab der Ernteeinrichtung gemäß Fig.5, jedoch mit einer entriegelten, gelösten Lagerung der Halteplatte bzw. des Schüttelstabs,
- Fig. 8: einen Ausschnitt aus der Fig. 7 in einer vergrößerten Darstellung der entriegelten Position,
- Fig. 9: eine Schnittansicht einer Verriegelung der Lagerung einer Halteplatte mit Hilfe eines durch einen Aktor angetriebenen bogenförmigen Koppelglieds, in Verriegelungsposition, jedoch ohne Aktor,
- Fig. 10: die Verriegelung gem. Fig. 9, mit einem als linear wirkenden Motor ausgebildeten Aktor, jedoch in entriegelter, gelöster Position der Halteplatte bzw. des Schüttelstabs,
- Fig. 11: eine perspektivische Darstellung der in Fig. 9 und 10 beschriebenen Ausführung in Verriegelungsstellung,
- Fig. 12: die in der Fig. 9 prinzipiell und in der Fig. 11 perspektivisch dargestellte Situation in der Verriegelung in einer Draufsicht,
- Fig. 13: die in der Fig. 10 dargestellt Position der entriegelten, gelösten Halteplatte ohne Schnitte in einer Draufsicht,
- Fig. 14: die Ausführung einer Verriegelung der Halteplatte mit Koppelelement und Linearantrieb in der Zusammenstellung mitsamt Schüttelstab, in der oberen Darstellung in verriegeltem Zustand, in der unteren Darstellung im entriegelten, gelösten Zustand
- Fig. 15: eine Schnittansicht einer Verriegelung einer an sich drehbaren Lagerung einer Halteplatte mit Hilfe eines durch einen Aktor aktivierbaren und in ein Koppelglied eingreifenden Rast- oder Haltelements, in verriegeltem Zustand der Halteplatte
- Fig. 16: die Schnittansicht einer Verriegelung gem. Fig. 15, jedoch in entriegeltem, gelöstem Zustand der Halteplatte,
- Fig. 17: eine perspektivische Darstellung der in Fig. 15 beschriebenen Ausführung in Verriegelungsstellung
- Fig. 18: eine Aufsicht auf die perspektivische Darstellung der Fig. 17, ebenfalls im Verriegelungszustand, jedoch mit einer auf das Koppelelement wirkenden Zugfeder,
- Fig. 19: die Aufsicht gemäß Fig. 18, jedoch im entriegelten, gelösten Zustand der Halteplatte bzw. des Schüttelstabs,
- Fig. 20: die Ausführung einer Verriegelung der Halteplatte gem. Fig. 18 in der Zusammenstellung mitsamt Schüttelstab, in der oberen Darstellung in verriegeltem Zustand, in der unteren Darstellung im entriegelten, gelösten Zustand.

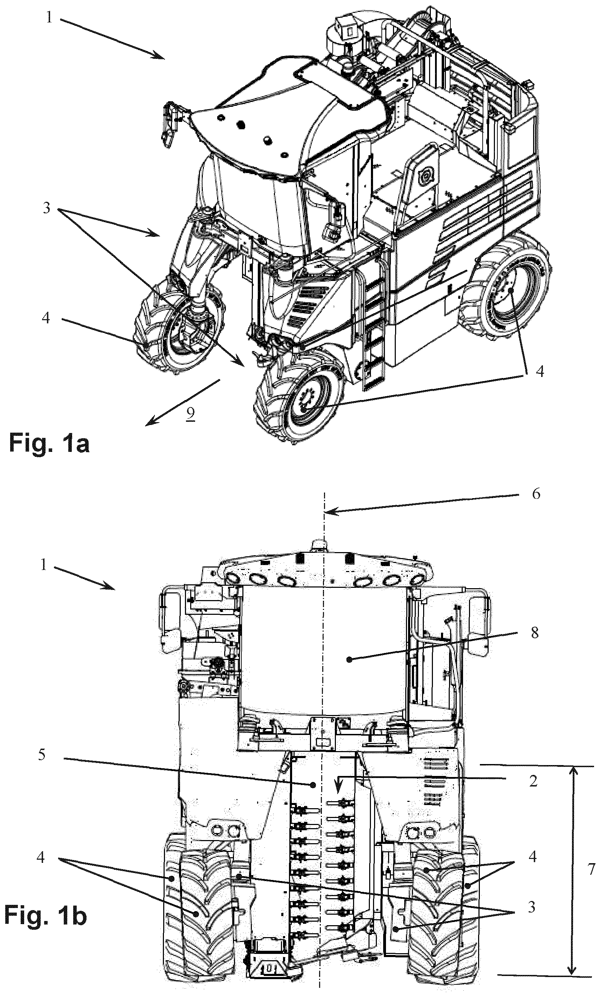

Die Fig. 1a und 1b zeigen ein landwirtschaftliches Fahrzeug 1, an dem eine erfindungsgemäße Ernteeinrichtung 2 z.B. für Reben an in Reihen gepflanzten Rebstöcken angeordnet ist. Fig. 1a zeigt eine perspektivische Darstellung des Fahrzeugs, während Fig. 1b dessen Ansicht von vorn zeigt.

Man erkennt deutlich, dass das Fahrzeug mit einem Portalfahrwerk 3 versehen ist, auch Stelzenfahrwerk genannt. Mit Hilfe des Portalfahrwerks 3 ist es möglich, über eine Reihe von hier nicht näher dargestellten Früchte tragenden Pflanzen, bspw. Rebstöcken, hinweg zu fahren. Die Räder 4 des Portalfahrwerks 3 laufen dabei links und rechts der Pflanzenreihe, so dass letztere sich etwa in der Mitte des Fahrzeugs, innerhalb des Portals 5 und in der Symmetrieachse 6 der Ernteeinrichtung 2 befindet. Vorausgesetzt ist dabei, dass die Pflanzen eine Höhe aufweisen, die nicht über die Portalhöhe 7 hinausreicht. Das Fahrzeug fährt also rittlings die Pflanzen überdeckend über die Pflanzenreihen, wobei die gesamte Bedienung des Fahrzeugs durch einen Fahrer in der Fahrerkabine 8 erfolgt.

Die Ernteeinrichtung 2 ist so in dem Portalfahrwerk 3 des Fahrzeugs 1 angeordnet, dass sie in Fahrt- und Arbeitsrichtung 9 entlang der die Früchte tragenden Pflanzen geführt und gefahren werden kann.

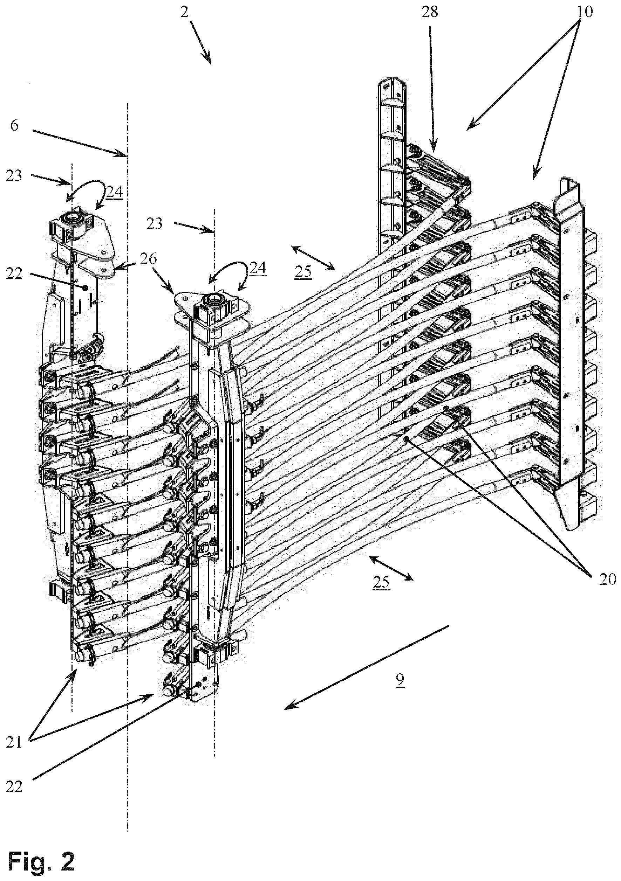

In der Ernteeinrichtung 2 sind links und rechts der Symmetrieachse 6 zwei parallel zur Fahrtrichtung sich erstreckende Schüttelvorrichtungen 10 mit jeweils acht Schüttelstäben 20 vorgesehen, wie in Fig. 2 deutlicher dargestellt ist. Die Schüttelstäbe 20 sind beabstandet übereinander angeordnet und erstrecken sich im Wesentlichen horizontal und längs der Fahrtrichtung 9 des Fahrzeugs 1 bzw. der Ernteeinrichtung 2. Die Schüttelstäbe 20 sind jeweils an einem ersten Ende 21 drehfest mit einem Antriebselement 22 verbunden.

Das jeweilige Antriebselement 22 ist seinerseits - in hier nicht näher dargestellter Weise - drehbar um seine jeweilige Längsachse 23 in der Ernteeinrichtung 2 gelagert und erstreckt sich in der Vertikalen über alle hier vorgesehenen acht Schüttelstäbe 20, also über die Höhe der Ernteeinrichtung und über alle Schüttelstäbe einer Schüttelvorrichtung.

Das Antriebselement 22 ist in einer über einen bestimmtem Winkelbereich oszillierenden Drehbewegung 24 um seine Längsachse antreibbar, wodurch die mit dem Antriebselement drehfest verbundenen Schüttelstäbe 20 in einer horizontalen Ebene und quer zu ihrer Längserstreckung eine auf die Pflanze gerichtete hin- und hergehende Schüttelbewegung 25 ausführen. Der Antrieb der Antriebselemente 22 erfolgt hier mit einem nicht näher dargestellten Exzenterantrieb, dessen Pleuel im oberen Bereich der Antriebselemente am jeweiligen Exzenterflansch 26 angreift.

Wie oben bereits beschrieben, sind die Schüttelstäbe 20 jeweils an einem ersten Ende 21 drehfest mit einem Antriebselement 22 verbunden. Diese drehfeste Verbindung entsteht jedoch erfindungsgemäß erst dadurch, dass eine an sich drehbare Lagerung des Schüttelstabs 20 um die Längsachse 23 des Antriebselements 22 durch eine Betätigung so verriegelt und blockiert werden kann, dass eine drehfeste Verbindung entsteht. Bei der drehfesten Verbindung zwischen Antriebselement und dem ersten Ende des jeweiligen Schüttelstabs handelt es sich also um eine verriegelte Drehverbindung, nämlich um eine fernbetätigbare, also schaltbare und wieder lösbare Verriegelung oder Blockade einer an sich drehbaren Lagerung des Schüttelstabs um die Längsachse des Antriebselements. Dadurch wird der jeweilige Schüttelstab relativ zum Antriebselement fixiert.

Fig. 2 zeigt einen Zustand, in dem alle Schüttelstäbe verriegelt sind, erkennbar an der erzwungenen, nach innen auf die Symmetrieebene der Ernteeinrichtung gerichteten Auslenkung oder Biegung der einzelnen Schüttelstäbe, die durch das Drehmoment bzw. die Drehung entsteht, die über die "eingeschaltete" drehfeste Verbindung zwischen Antriebselement und Schüttelstab auf letzteren übertragen wird. Bei einer oszillierenden Drehbewegung 24 des Antriebselements 22 schwingt der jeweilige Schüttelstab 20 in einer hin- und hergehende Schüttelbewegung 25 quer zur Fahrtrichtung in einer horizontalen Transversalebene.

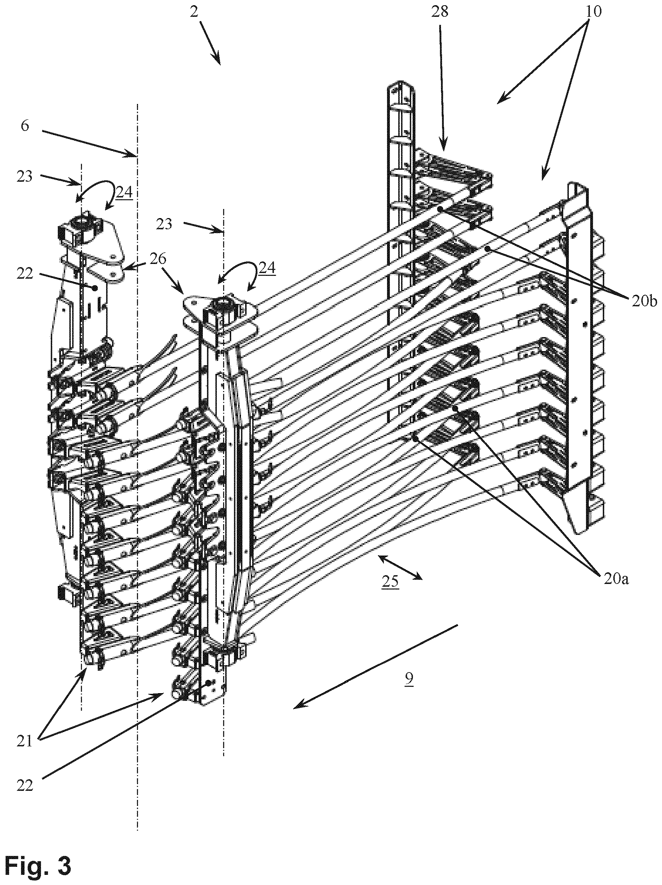

Fig. 3 dagegen zeigt einen Zustand, in dem auf jeder Seite nur die unteren sechs Schüttelstäbe 20a verriegelt sind und die drehfeste Verbindung der jeweils oberen beiden Schüttelstäbe 20b gelöst ist. Dies ist bei den jeweils oberen beiden Schüttelstäben 20b daran erkennbar, dass keine durch die Antriebselemente 22 erzwungene Auslenkung oder Biegung der einzelnen Schüttelstäbe vorhanden ist. Die jeweils oberen beiden Schüttelstäbe 20b sind frei um die Längsachse 23 der Antriebselemente drehbar, können so kein Drehmoment aufnehmen, damit keine Schüttelbewegung ausführen und stehen also still. Die Einwirkung der Schüttelstäbe und somit der Arbeitsbereich der Ernteeinrichtung ist dadurch in der Höhe begrenzt, so dass kleiner wachsende Pflanzen oder auch nur Teile von Pflanzen geschüttelt werden können.

Zur Verdeutlichung ist hier und im Folgenden der Schüttelstab 20 in seiner Verriegelungsposition mit der Bezugsziffer 20a und in seiner entriegelten, gelösten Position mit der Bezugsziffer 20b bezeichnet.

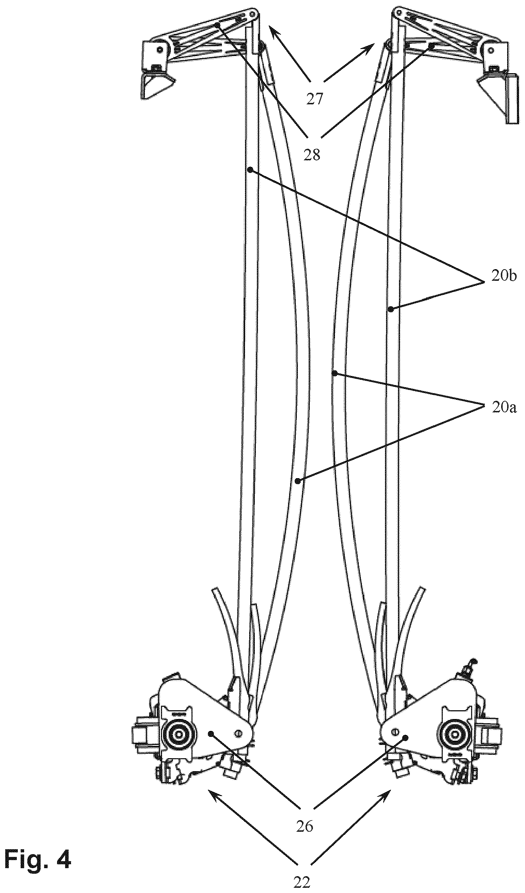

Fig. 4 zeigt zur Verdeutlichung eine Aufsicht auf die Ernteeinrichtung, bei der die gegenüberliegenden Schüttelstäbe noch einmal in den durch das Verriegeln bzw. Lösen ihrer Lagerungen am Antriebselement erzeugten unterschiedlichen Positionen dargestellt sind, nämlich die Schüttelstäbe 20a mit verriegelter Lagerung am Antriebselement 22 und die Schüttelstäbe 20b mit offener, aus der Verriegelung gelöster, drehbarer Lagerung.

An ihrem zweiten Ende, d.h. an dem dem Antriebselement 22 gegenüberliegenden Ende 27 sind die Schüttelstäbe über ein Koppelglied bzw. Koppelhebel oder -stange in Form einer Lagerschwinge 28 in der Ernteeinrichtung gelagert.

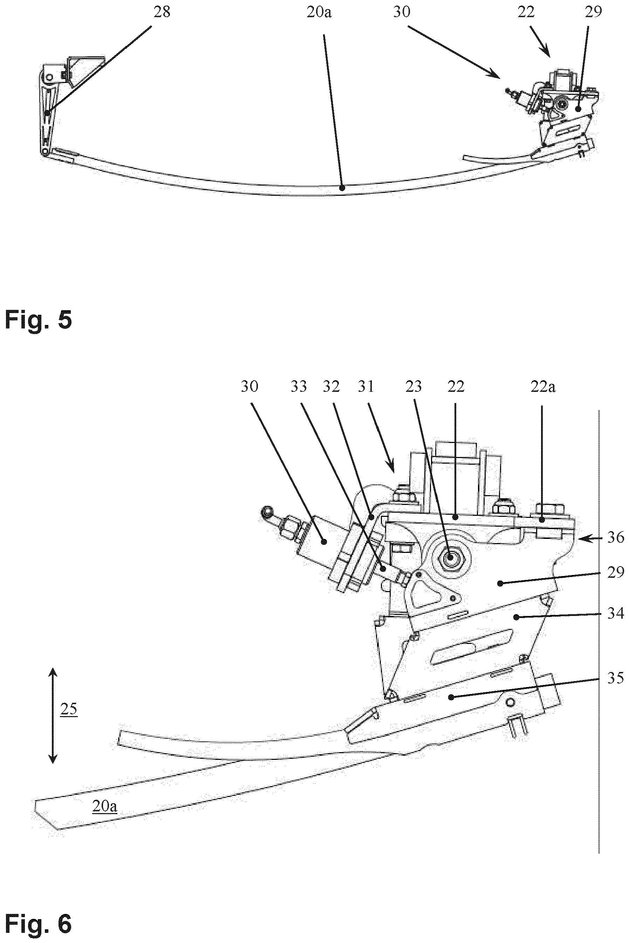

Fig. 5 bis 20 zeigen nun im Detail die erfindungsgemäßen Ausführungen der fernbetätigbaren, lösbaren Verriegelung der drehbaren Lagerung eines Schüttelstabs bzw. seiner Halteplatte am Antriebselement.

Fig. 5 zeigt eine generelle Aufsicht auf einen Schüttelstab 20a der Ernteeinrichtung mit verriegelter Lagerung am Antriebselement 22.

Fig. 6 zeigt einen Ausschnitt aus der Fig. 5 in einer vergrößerten Darstellung der Verriegelungsposition am antriebsseitigen Ende des Schüttelstabs 20, also dort, wo der der Schüttelstab 20 bzw. 20a über eine fernbetätigbare, lösbare Verriegelung drehfest mit dem Antriebselement 22 verbunden ist.

Die Verriegelung der Drehlagerung des Schüttelstabs 20 erfolgt in dieser Ausführung mit einem fernbetätigbaren hydraulisch angetriebenen Aktor, hier nämlich mit einem am Antriebselement 22 befestigten Hydraulikzylinder 30. Der Hydraulikzylinder 30 ist dazu mit einer Schraubverbindung 31 und einer Lasche 32 mit dem Antriebselement 22 fest verbunden. Der Schüttelstab 20 ist dabei über eine an seinem antriebseitigen Ende befestigten Halteplatte 29 mit dem Antriebselement 22 so verbunden, dass die Halteplatte drehbar um die hier senkrecht zur Zeichnungsebene stehende Längsachse 23 des Antriebselements 22 gelagert ist. Die Anbindung zwischen Schüttelstab 20 bzw. 20a und Halteplatte 29 erfolgt über entsprechend gestaltete, hier aber nicht näher beschriebene Anschlussbauteile und -flansche 34 und 35.

Zum Erreichen der in Fig. 5 und 6 gezeigten Verriegelungsposition wird der Aktor betätigt, nämlich der Hydraulikzylinder 30. Dieser wird mit Innendruck beaufschlagt, so dass der Kolben 33 ausgefahren wird. Der Kolben 33 drückt auf die Halteplatte 29 und schwenkt sie um die Längsachse 23 in eine Verriegelungsposition, bei der die Halteplatte 29 unter Druck / Hydraulikdruck mit ihrem Fußbereich 36 an einem Anlageflansch 22a des Antriebselements 22 anliegt. Damit ist die Halteplatte relativ zum Antriebselement kraftschlüssig fixiert und eine Drehung bzw. Bewegung sowohl der Halteplatte 29 als auch des Schüttelstabs 20 bzw. 20a gegenüber dem Antriebselement 22 vollkommen blockiert.

In der in den Fig. 5 und 6 gezeigten Verriegelungsposition ist der Schüttelstab 20a also drehfest mit dem Antriebselement 22 verbunden, so dass bei einer oszillierenden Drehbewegung 24 des Antriebselements 22 der Schüttelstab 20a in einer hin- und hergehende Schüttelbewegung 25 in einer horizontalen Transversalebene schwingt.

Es sei hier bemerkt, dass auch durch andere, in vergleichbarer Art und Weise am Antriebselement angelenkte Aktoren, beispielsweise durch einen elektrisch angetriebenen linear wirkenden Motor, eine ebensolche Verriegelung der Halteplatte erfolgen kann.

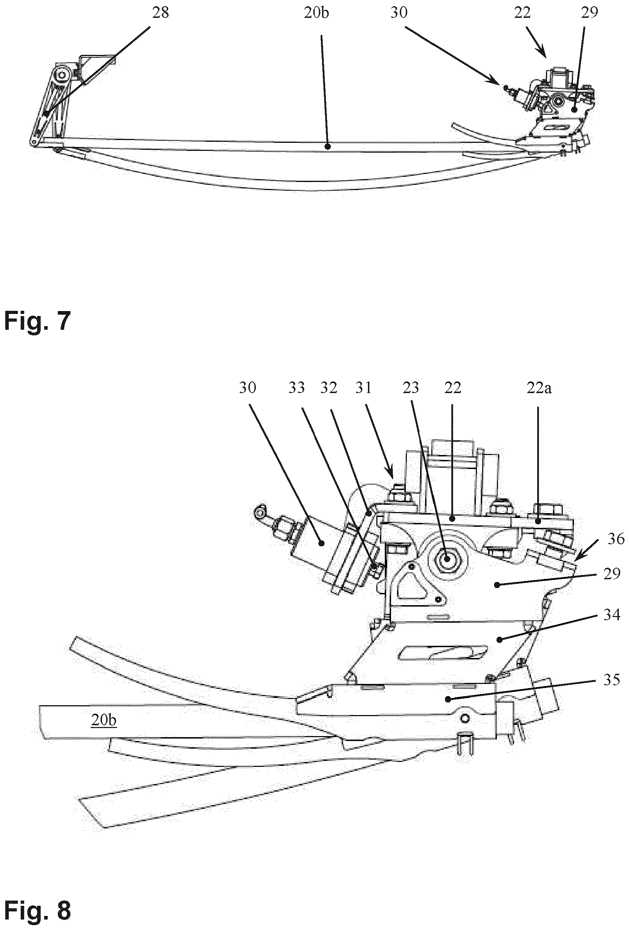

Fig. 7 zeigt eine generelle Aufsicht auf einen Schüttelstab 20b der Ernteeinrichtung, dessen Halteplatte 29 nicht verriegelt ist und der sich also relativ zum Antriebselement 22 frei drehen kann bzw. sich um die senkrecht zur Zeichnungsebene stehende Längsachse 23 des Antriebselements frei schwenken lässt.

Fig. 8 zeigt einen Ausschnitt aus der Fig. 7, nämlich eine vergrößerte Darstellung der Position am antriebsseitigen Ende des Schüttelstabs 20, in der der Schüttelstab, respektive die Halteplatte relativ zum Antriebselement entriegelt, d.h. gelöst um die Achse 23 drehbar sind, so dass vom Antriebselement 22 kein Drehmoment und damit keine hin- und hergehende Schüttelbewegung auf den Schüttelstab übertragbar ist.

Das Erreichen einer Verriegelung der Drehlagerung des Schüttelstabs 20 respektive der Halteplatte 29 ist oben beschrieben. Zum Erreichen einer in Fig. 7 und 8 gezeigten unverriegelten, gelösten Position wird wiederum der Aktor betätigt, allerdings nun so, dass der Hydraulikzylinder 30 vom Innendruck entlastet bzw. der Kolben 33 so druckbeaufschlagt wird, dass der Kolben 33 in den Zylinder 30 zurückgefahren wird. Der Kolben 33 drückt dann nicht mehr auf die Halteplatte 29, wodurch letztere durch die Rückstellkraft des Schüttelstabs und/oder durch zusätzliche Federbeaufschlagung um die Längsachse 23 zurückschwenkt in eine Loseposition, bei der die Halteplatte 29 mit ihrem Fußbereich 36 nicht mehr am Anlageflansch 22a des Antriebselements 22 anliegt. Damit ist die kraftschlüssige Fixierung der Halteplatte aufgehoben und eine Drehung bzw. Bewegung sowohl der Halteplatte 29 als auch des Schüttelstabs 20b gegenüber dem Antriebselement 22 wieder möglich.

In der in den Fig. 7 und 8 gezeigten entriegelten Position ist auch bei einer oszillierenden Drehbewegung 24 des Antriebselements 22 keine Übertragung eines Drehmoments auf den Schüttelstab 20b möglich, so dass keine hin- und hergehende Schüttelbewegung erfolgt und der Schüttelstab im Wesentlichen ruhig liegt.

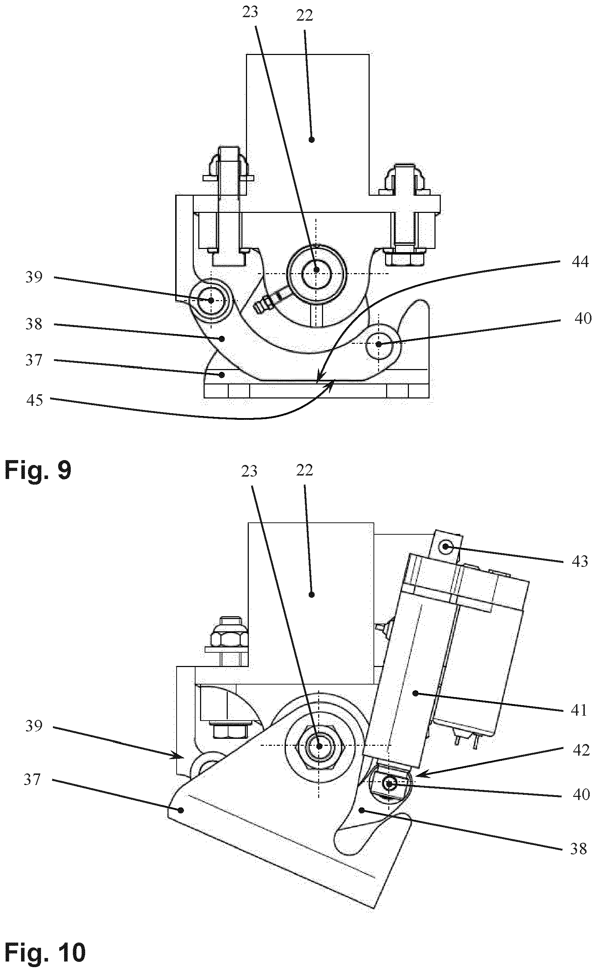

Die Fig. 9 bis 14 zeigen eine Ausführung einer Ernteeinrichtung mit einer alternativen Art einer mit Hilfe eines Aktors über ein Koppelglied aktivierbaren Verriegelung und Blockade einer an sich drehbaren Verbindung zwischen Halteplatte und Antriebselement. In der Schnittdarstellung der Fig. 9 ist der hier verwendete Aktor jedoch der besseren Übersicht halber nicht eingezeichnet, in den Fig. 10 bis 14 ist der Aktor enthalten.

Die grundlegende Funktionsweise der hier vorgesehenen erfindungsgemäßen Ausführung lässt sich am besten anhand der Fig. 9 und 10 erklären. Auch dort erkennt man zunächst eine drehbar bzw. schwenkbar um die senkrecht zur Zeichnungsebene stehende Längsachse 23 eines Antriebselements 22 gelagerte und am antriebseitigen Ende des Schüttelstabs vorgesehene Halteplatte 37, die hier zwar anders ausgebildet ist als in der oben beschriebenen Ausführung, aber ebenfalls durch ihre Verriegelung relativ zum Antriebselement 22 fixierbar ist.

In der Schnittdarstellung der Fig. 9 erkennt man weiterhin ein bogenförmiges Koppelglied 38, welches über eine Gelenkverbindung 39 am Antriebselement 22 und über eine weitere Gelenkverbindung 40 an der Druckstange 42 eines als linear wirkenden Motor 41 ausgebildeten Aktors angelenkt ist, wie sich in der Zusammenschau mit der Fig. 10 weiter ergibt.

Der Aktor bzw. der linear wirkende Motor 41 ist wiederum über die Gelenkverbindung/- lagerung 43 am Antriebselement 22 und andererseits über die Gelenkverbindung 40 am Koppelglied angelenkt.

Durch Betätigung des linear wirkenden Motors 41 und damit das Ausfahren der Druckstange 42 wird das bogenförmige Koppelglied 38 um die Gelenkverbindung 39 an seinem zweiten Ende verschwenkt und in eine die drehbare Lagerung der Halteplatte blockierende und die Halteplatte 37 fixierende Verriegelungsposition gebracht. In dieser Verriegelungsposition, selbsterklärend dargestellt in Fig. 9, bilden Koppelglied 38 und Halteplatte 37 durch die druckbelastete Anlage ihrer beiden Kontaktflächen bzw. Komplementärformen 44 und 45 sowie die Anlage des Bolzens der Gelenkverbindung 40 in der Aussparung der Halteplatte 37 einen Form- und Kraftschluss zwischen Halteplatte 37 und Koppelglied 38.

Die Fig. 9 zeigt also die Verriegelungsposition der Halteplatte 37 und die Fig. 10 die Position der gelösten Halteplatte. Das Zusammenspiel zwischen Aktor/linear wirkendem Motor 41, Koppelglied 38 und Halteplatte 37 dient hierbei primär der Verriegelung der drehbar gelagerten Halteplatte; für das Verbringen oder Verschwenken der Haltplatte in diese verriegelbare Position sind ggf. zusätzliche Schwenkbewegungen oder Krafteinwirkungen erforderlich, je nach Ausbildung der zur Verriegelung zusammenwirkenden Kontaktflächen bzw. Komplementärformen. Dadurch, dass der linear wirkende Motor 41 längenveränderlich ausgebildet ist, nämlich durch die ausfahrbare Druckstange 42, bilden der linear wirkende Motor 41 und das Koppelglied 38 mit ihrer jeweiligen Anlenkung an das Antriebselement hier eine Art Koppelgetriebe, mit dem die Verriegelungsposition durch eine über den linear wirkenden Motor erzeugte druckbelastete Anlage des Koppelglieds an der Halteplatte erreichbar ist.

Auch bei dieser Ausführung ist darauf hinzuweisen, dass auch andere Aktoren eingesetzt werden können, etwa hydraulisch oder pneumatisch arbeitende Aktoren.

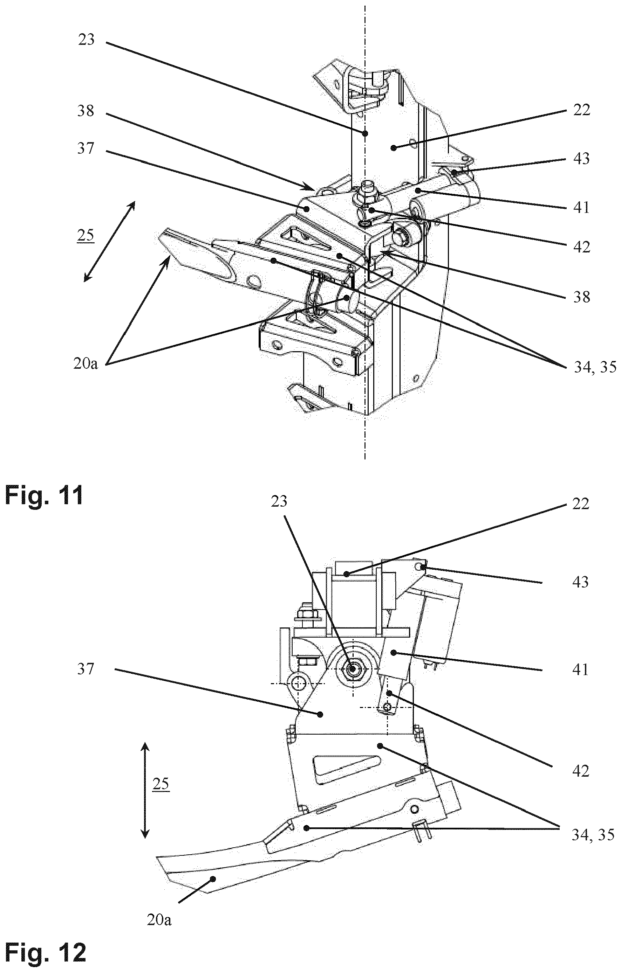

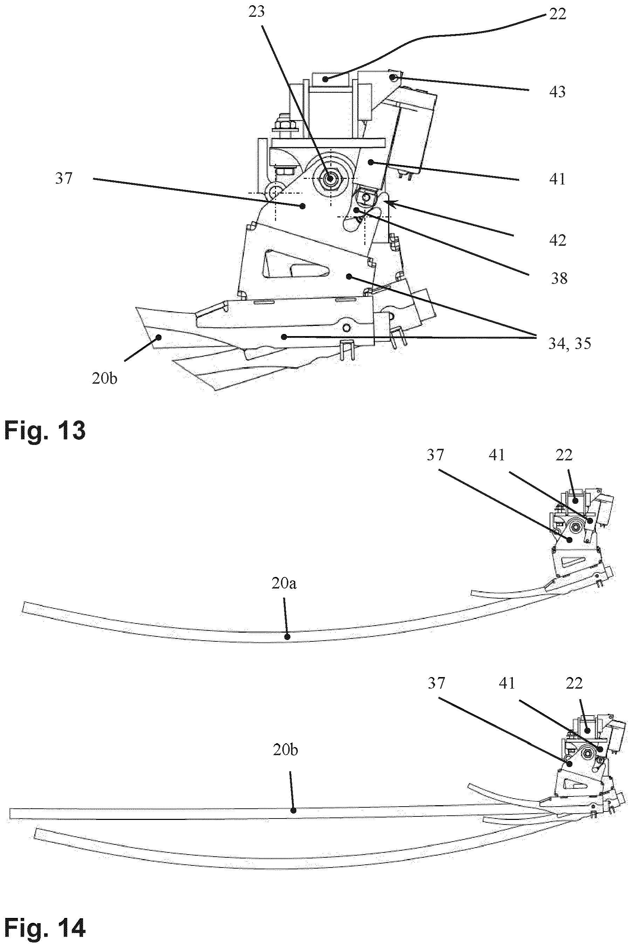

Fig. 11 bis 14 verdeutlichen die Ausbildung der in den Fig. 9 und 10 gezeigten Verriegelung mit einem Koppelglied 38. Fig. 11 zeigt dabei eine perspektivische Darstellung der Anbindung an das Antriebselement, Fig 12 und 13 eine Aufsicht in verriegeltem und in gelöstem Zustand. Fig. 14 zeigt eine Darstellung mitsamt Schüttelstab in ihrem oberen Teil in verriegeltem Zustand und in ihrem unteren Teil in gelöstem Zustand.

Fig. 11 zeigt eine perspektivische Darstellung der in Fig. 9 und 10 beschriebenen Ausführung in Verriegelungsstellung. Dazu ist die Druckstange 42 des linear wirkenden Motors 41 ausgefahren und drückt das Koppelglied 38 in eine druckbelastete Anlage gegen die und Halteplatte 37, wie aus Fig. 9 ersichtlich. Der dadurch über die fixierte Halteplatte 37 und über die Anschlussteile 34, 35 drehfest mit dem Antriebselement 22 verriegelte Schüttelstab 20a kann somit der Schüttelstab 20a bei einer oszillierenden Drehbewegung 24 des Antriebselements 22 um die Drehachse 23 in einer hin- und hergehende Schüttelbewegung 25 in einer horizontalen Transversalebene schwingen.

Fig. 12 zeigt die in der Fig. 9 prinzipiell und in der Fig. 11 perspektivisch dargestellte Situation in der Verriegelung noch einmal in einer Draufsicht.

Fig. 13 zeigt dagegen die in der Fig. 10 dargestellt Position der gelösten Halteplatte 37 ohne Schnitte in einer Draufsicht. In dieser Position ist auch bei einer oszillierenden Drehbewegung des Antriebselements 22 keine Übertragung eines Drehmoments auf den Schüttelstab 20b möglich, so dass keine hin- und hergehende Schüttelbewegung erfolgt und der Schüttelstab im Wesentlichen ruhig liegt.

Fig 14 zeigt noch einmal der Übersicht halber eine Darstellung der Ausführung mit Koppelelement und Linearantrieb in der Zusammenstellung mitsamt Schüttelstab, nämlich in der oberen Darstellung in verriegeltem Zustand des Schüttelstabs und der Halteplatte und in der unteren Darstellung im gelösten Zustand ohne übertragbare Dreh- oder Schüttelbewegung zwischen Antriebselement und Halteplatte bzw. Schüttelstab.

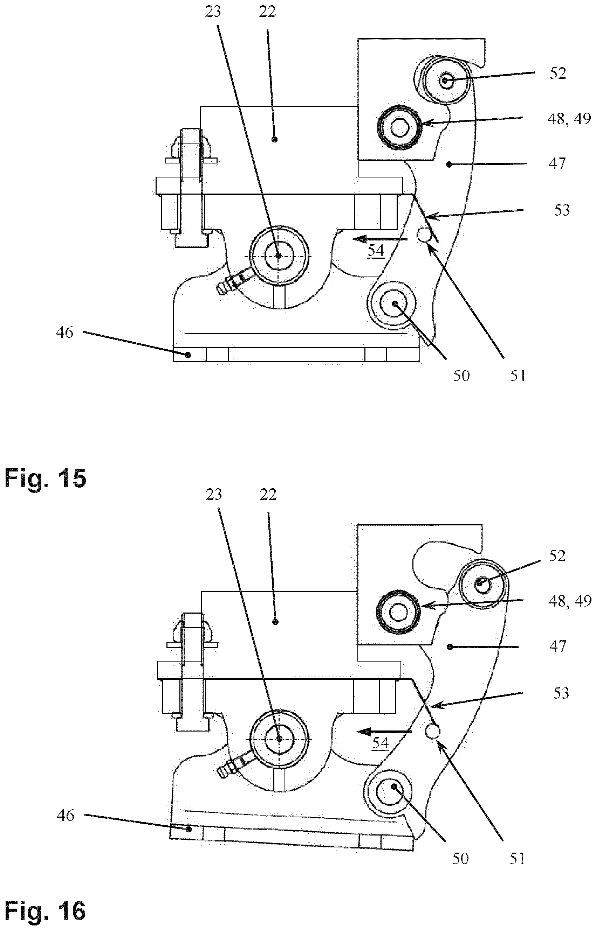

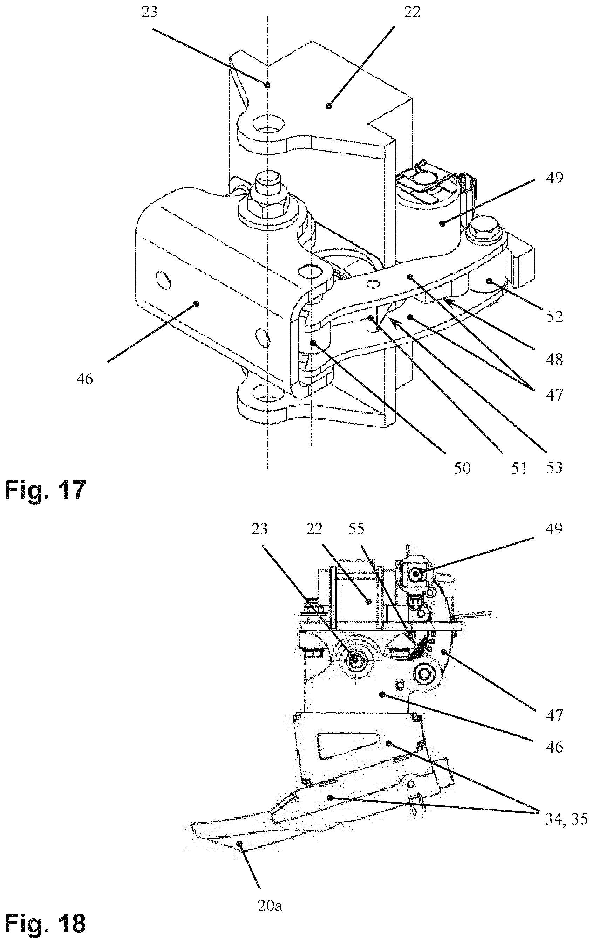

Die Fig. 15 bis 20 zeigen eine weitere Ausführung einer Ernteeinrichtung mit einer wiederum anders gestalteten Art einer mit Hilfe eines Aktors aktivierbaren Verriegelung und Blockade einer an sich drehbaren Verbindung zwischen Halteplatte und Antriebselement. In der perspektivischen Darstellung der Fig. 17 ist der hier als Druckankermagnet 49 ausgebildete Aktor am besten zu erkennen.

Die grundlegende Funktionsweise dieser erfindungsgemäßen Ausführung erkennt man am besten anhand der Fig. 15 bis 17. Zusammengefasst ist auch hier eine drehbar bzw. schwenkbar um die senkrecht zur Zeichnungsebene stehende Längsachse 23 eines Antriebselements 22 gelagerte und am antriebseitigen Ende des Schüttelstabs befindliche Halteplatte 46 vorgesehen, die mittels eines mit einem Koppelglied 47 zusammenwirkenden Rast- oder Haltelement 48, welches mit dem Antriebselement 22 starr verbunden ist, verriegelbar bzw. in ihrer Drehbewegung blockierbar ist. Das Koppelglied 47 ist dabei an dem Rast- oder Halteelement 48 durch einen am Antriebselement 22 angeordneten Druckankermagneten 49 verriegelbar.

In der Zusammenschau der Schnittdarstellung der Fig. 15 und der perspektivischen Darstellung der Fig. 17 erkennt man, dass das Koppelglied 47, welches über eine Gelenkverbindung 50 an der Halteplatte 46 angelenkt ist, aus einer oberen und unteren Platte besteht, die über Stifte 51 und Bolzen 52 fest miteinander zu einem um die Gelenkverbindung 50 schwenkbaren Koppelglied 47 verbunden sind. Eine am Antriebselement befestigte Blattfeder 53 erzeugt über den Stift 51 eine zusätzlich auf das Koppelglied 47 wirkende Kraft 54, welche das Koppelglied in seine Verriegelungsposition drückt bzw. es in Richtung Raststellung schwenkt.

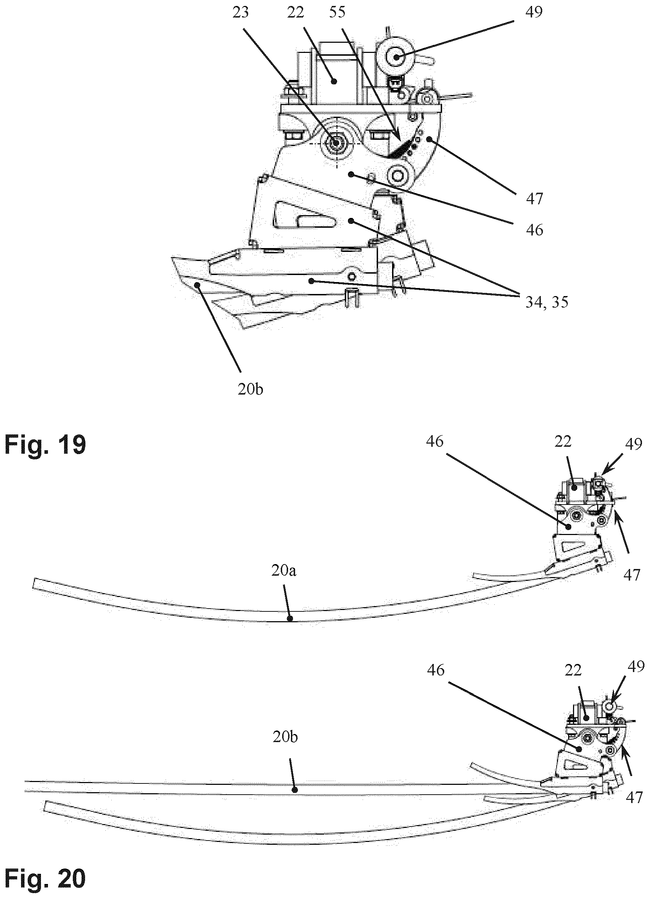

Der hier als Druckankermagnet 49 ausgebildete Aktor bewirkt als solcher ein hier weder eine Schwenkbewegung des Koppelglieds 47 noch eine solche der daran angelenkten Halteplatte 46. Der hier vorgesehene Druckankermagnet 49 treibt lediglich ein Verriegelungselement in eine dafür vorgesehene Bohrung in der oberen Platte des Koppelglieds 47, wenn sich das Koppelglied 47 mit dem Rast- oder Halteelement 48 in einer Verriegelungsposition befindet, wodurch die Verriegelungsposition fixiert ist, nachdem sie durch äußere Krafteinwirkung erreicht wurde. Alternativ kann das Verriegelungselement in eine Bohrung in der unteren Platte eingreifen. Bohrung und Rast- oder Halteelement/Rastbolzen sind hier zeichnerisch nicht detaillierter dargestellt, dem Fachmann aber in einer Vielzahl von konstruktiven Ausbildungen bekannt. Die äußere Krafteinwirkung zur Erreichung der Verriegelungsposition kann durch die Blattfeder 53 oder auch durch eine starke Zugfeder 55 unterstützt werden, wie sie beispielsweise in den Fig. 18 und 19 als alternative Ausbildung einer Feder skizziert ist.

Die Fig. 15, 17 und 18 zeigen die Verriegelungsposition der Halteplatte 46 und die Fig. 16 und 19 die Position der gelösten, entriegelten Halteplatte.

Fig. 18 zeigt eine Aufsicht auf die perspektivische Darstellung der Fig. 17, also den Verriegelungszustand. Der Schüttelstab 20a ist auch hier, wie in den vorher beschriebenen Ausführungen, über eine an seinem antriebseitigen Ende befestigten Halteplatte 46 mit dem Antriebselement 22 verbunden, wobei die Halteplatte drehbar um die senkrecht zur Zeichnungsebene stehende Längsachse 23 des Antriebselements 22 gelagert ist. Die Anbindung zwischen Schüttelstab 20a und Halteplatte 46 erfolgt auch hier über die entsprechend gestalteten Anschlussbauteile und -flansche 34 und 35.

Im Gegensatz zur Fig. 18 zeigt die Fig. 19 eine Aufsicht auf dieselbe Ausführung in einer entriegelten, gelösten Position der Halteplatte 46. In dieser Position ist auch bei einer oszillierenden Drehbewegung des Antriebselements 22 keine Übertragung eines Drehmoments auf den Schüttelstab 20b möglich, da durch Rückstellung des Druckankermagneten 49 und des Verriegelungselements das Koppelglied 47 aus der Verriegelungsposition bewegt werden kann. Halteplatte 46 und Schüttelstab 20b weisen dann keine drehfeste Verbindung zum Antriebselement 22 mehr auf, so dass keine hin- und hergehende Schüttelbewegung erfolgt und der Schüttelstab im Wesentlichen ruhig liegt.

Fig 20 zeigt in einer Zusammenstellung mitsamt Schüttelstab den verriegelten Zustand in der oberen Darstellung, während in der unteren Darstellung der entriegelte, gelöste Zustand ohne übertragbare Dreh- oder Schüttelbewegung zwischen Antriebselement und Halteplatte bzw. Schüttelstab gezeigt ist.

### Bezugszeichenliste

### (Teil der Beschreibung)

- 1: landwirtschaftliches Fahrzeug
- 2: Ernteeinrichtung
- 3: Portalfahrwerk
- 4: Räder des Fahrzeugs
- 5: Portal
- 6: Symmetrieachse des Ernteeinrichtung
- 7: Portalhöhe
- 8: Fahrerkabine
- 9: Fahrtrichtung
- 10: Schüttelvorrichtung
- 20: Schüttelstab
- 20a: Schüttelstab, drehfest verriegelt
- 20b: Schüttelstab, unverriegelt
- 21: erstes Ende des Schüttelstabs
- 22: Antriebselement
- 22a: Anlageflansch des Antriebselements
- 23: Längsachse des Antriebselements
- 24: oszillierenden Drehbewegung
- 25: hin- und hergehende Schüttelbewegung
- 26: Exzenterflansch
- 27: zweites Ende des Schüttelstabs
- 28: Lagerschwinge / beweglicher Lenker
- 29: Halteplatte des Schüttelstabs
- 30: hydraulisch angetriebener Aktor/Hydraulikzylinder
- 31: Schraubverbindung
- 32: Lasche
- 33: Kolben
- 34: Anschlussbauteil
- 35: Anschlussbauteil
- 36: Fußbereich der Halteplatte
- 37: Halteplatte des Schüttelstabs
- 38: Koppelglied
- 39: Gelenkverbindung
- 40: Gelenkverbindung
- 41: Linearantrieb
- 42: Druckstange des Linearantriebs
- 43: Gelenkverbindung/-lagerung
- 44: Kontaktfläche oder Komplementärform (Halteplatte)
- 45: Kontaktfläche oder Komplementärform (Koppelglied)
- 46: Halteplatte des Schüttelstabs
- 47: Koppelglied
- 48: Rast- oder Halteelement
- 49: Druckankermagnet
- 50: Gelenkverbindung
- 51: Stift / Verbindungsstift
- 52: Bolzen / Verbindungsbolzen
- 53: Blattfeder
- 54: Kraft-Wirkungslinie
- 55: Zugfeder

## Patentansprüche

1. Zur Anordnung an einem Fahrzeug (1) vorgesehene Ernteeinrichtung (2) für Früchte tragende Pflanzen, insbesondere für Reben an in Reihen gepflanzten Rebstöcken, wobei die Ernteeinrichtung (2) in Fahrt- und Arbeitsrichtung entlang der die Früchte tragenden Pflanzen verfahrbar ausgebildet ist und mehrere sich parallel zur Fahrtrichtung (9) erstreckende und beabstandet übereinander angeordnete Schüttelstäbe (20, 20a, 20b) aufweist, wobei die Schüttelstäbe jeweils an einem ersten Ende drehfest mit einem Antriebselement (22) verbunden sind, welches seinerseits drehbar um seine Längsachse (23) in der Ernteeinrichtung (2) gelagert ist und sich in der Vertikalen entlang mehrerer Schüttelstäbe (20, 20a, 20b) erstreckt, wobei das Antriebselement (22) in einer über einen bestimmtem Winkelbereich oszillierenden Drehbewegung (24) um seine Längsachse (23) antreibbar ist, wodurch die mit dem Antriebselement (22) drehfest verbundenen Schüttelstäbe (20, 20a, 20b) in einer horizontalen Ebene und quer zu ihrer Längserstreckung eine auf die Pflanze gerichtete hin- und hergehende Schüttelbewegung (25) ausführen, **dadurch gekennzeichnet, dass** die drehfeste Verbindung zwischen Antriebselement (22) und dem ersten Ende des jeweiligen Schüttelstabs (20, 20a, 20b) als eine lösbare, mittels hydraulisch, elektromechanisch oder elektromagnetisch angetriebener Aktoren (30, 41, 49) fernbetätigbare Verriegelung einer drehbaren Lagerung des Schüttelstabs (20, 20a, 20b) um die Längsachse (23) des Antriebselements (22) ausgebildet ist, wobei der Schüttelstab (20, 20a, 20b) relativ zum Antriebselement (22) fixierbar ist.

2. Ernteeinrichtung (2) nach Anspruch 1, bei der die drehfeste Verbindung als eine mit Hilfe von Aktoren (30, 41, 49) aktivierbare Verriegelung einer drehbar oder schwenkbar um die Längsachse (23) des Antriebselements (22) gelagerten und am antriebseitigen Ende des Schüttelstabs (20, 20a, 20b) vorgesehenen Halteplatte (29, 37, 46) ausgebildet ist, wobei durch die Verriegelung die Halteplatte (29, 37, 46) relativ zum Antriebselement (22) fixierbar ist.

3. Ernteeinrichtung (2) nach Anspruch 2, bei der ein so am Antriebselement (22) angelenkter und auf die Halteplatte (29, 37, 46) wirkender Aktor (30, 41, 49) vorgesehen ist, dass die Halteplatte (29, 37, 46) durch den Aktor (30, 41, 49) in eine ihre drehbare Lagerung blockierende Verriegelungsposition schwenkbar und dort fixierbar ist, vorzugsweise in einen Formschluss und/oder Kraftschluss zwischen Halteplatte (29, 37, 46) und Antriebselement (22) schwenkbar ist.

4. Ernteeinrichtung (2) nach Anspruch 3, bei der der Aktor (30, 41, 49) als ein am Antriebselement (22) angelenkter Hydraulikzylinder (30) ausgebildet ist, durch dessen Kolben (33) die Halteplatte (29, 37, 46) in eine ihre drehbare Lagerung blockierende Verriegelungsposition schwenkbar ist.

5. Ernteeinrichtung (2) nach Anspruch 2, bei der ein einerseits am Antriebselement (22) und andererseits an einem ersten Ende eines Koppelglieds (38, 47) angelenkter Aktor (30, 41, 49) vorgesehen ist, wobei das Koppelglied (38, 47) an seinem zweiten Ende ebenfalls am Antriebselement (22) angelenkt und das Koppelglied (38, 47) oder ein damit verbundenes Teil einer Gelenkverbindung (40) zwischen dem Antriebselement (22) und dem Koppelglied (38, 47) durch den Aktor (30, 41, 49) in eine die drehbare Lagerung der Halteplatte (29, 37, 46) blockierende und die Halteplatte (29, 37, 46) fixierende Verriegelungsposition schwenkbar ist, vorzugsweise in einen Formschluss und/oder Kraftschluss zwischen Halteplatte (29, 37, 46) und Koppelglied (38, 47) bzw. dem mit dem Antriebselement (22) verbundenen Teil der Gelenkverbindung (40).

6. Ernteeinrichtung (2) nach Anspruch 5, bei der der Aktor (30, 41, 49) als ein am Antriebselement (22) angelenkter und auf das Koppelglied (38, 47) linear wirkender Motor (41) ausgebildet ist, wodurch das Koppelglied (38, 47) in die Verriegelungsposition schwenkbar ist.

7. Ernteeinrichtung (2) nach Anspruch 5 oder 6, bei der die Fixierung der Halteplatte (29, 37, 46) in der Verriegelungsposition durch eine über den Aktor (30, 41, 49) druckbelastete Anlage des Koppelglieds (38, 47) an der Halteplatte (29, 37, 46) erzeugbar ist.

8. Ernteeinrichtung (2) nach Anspruch 2, bei der ein an seinem ersten Ende an einer Halteplatte (29, 37, 46) angelenktes, in Richtung auf das Antriebselement (22) schwenkbares und an seinem zweiten Ende am Antriebselement (22) in einer Verriegelungsposition fixierbares Koppelglied (38, 47) vorgesehen ist, wobei in der Verriegelungsposition des Koppelglieds (38, 47) die drehbare Lagerung der Halteplatte (29, 37, 46) blockierbar und die Halteplatte (29, 37, 46) fixierbar ist.

9. Ernteeinrichtung (2) nach Anspruch 8, bei der das Koppelglied (38, 47) in der Verriegelungsposition durch ein in das Koppelglied (38, 47) eingreifendes Rast- oder Haltelement (48) fixierbar ist, welches durch einen am Antriebselement angeordneten Aktor (30, 41, 49) betätigbar ist.

10. Ernteeinrichtung (2) nach Anspruch 8 oder 9, bei der das Rast- oder Haltelement (48) als ein durch den Zug- oder Druckanker eines am Antriebselement (22) angeordneten Elektromagneten (49) betätigbarer, in das Koppelglied (38, 47) eingreifender Rastbolzen ausgebildet ist.

11. Ernteeinrichtung (2) nach einem der Ansprüche 1 bis 10, bei der das Antriebselement (22) als ein im sich über alle Schüttelstäbe (20, 20a, 20b) erstreckendes längliches Profil ausgebildet und an einem Ende über einen Koppelhebel oder Pleuel mit einem Exzenterantrieb über einen bestimmtem Winkelbereich in einer oszillierenden Drehbewegung (24) antreibbar ist.

12. Ernteeinrichtung (2) nach einem der Ansprüche 1 bis 11, bei der die Schüttelstäbe (20, 20a, 20b) elastisch biegsam ausgebildet und beidseitig in der Ernteeinrichtung (2) gelagert sind, wobei das dem Antriebselement (22) gegenüberliegende Stabende (27) über eine Koppelstange in Form eines beweglichen Lenkers (28) im Rahmen gelagert ist.

13. Ernteeinrichtung (2) nach einem der Ansprüche 1 bis 12, bei der das Antriebselement (22) am in Fahrtrichtung oder Arbeitsrichtung (9) vorderen Ende der Ernteeinrichtung (2) in letzterer drehbar gelagert ist.

14. Ernteeinrichtung (2) nach einem der Ansprüche 1 bis 13, bei der die Ernteeinrichtung (2) und das Fahrwerk des aufnehmenden Fahrzeugs in Form eines die jeweilig zu bearbeitende Pflanzenreihe übergreifenden Portals (3) ausgebildet sind und die Ernteeinrichtung derart mit einander gegenüberliegenden Anordnungen von horizontal ausgerichteten länglichen Schüttelstäben (20, 20a, 20b) versehen ist, dass letztere sich links und rechts einer Pflanzenreihe befinden und eine auf die Pflanze(n) gerichtete hin- und hergehende horizontale Schüttelbewegung (25) quer zur Fahrtrichtung ausführen.

## Claims

1. Harvesting device (2), which is intended for arranging on a vehicle (1), for fruit-bearing plants, in particular for grapes on vines planted in rows, wherein the harvesting device (2) is designed to be movable along the fruit-bearing plants in the direction of travel and working direction and has a plurality of shaking rods (20, 20a, 20b) extending parallel to the direction of travel (9) and arranged spaced apart one above another, wherein the shaking rods are in each case connected at a first end for conjoint rotation to a drive element (22), which, in turn, is rotatably mounted about its longitudinal axis (23) in the harvesting device (2) and extends vertically along a plurality of shaking rods (20, 20a, 20b), wherein the drive element (22) is drivable in a rotational movement (24) oscillating over a certain angular range about its longitudinal axis (23), as a result of which the shaking rods (20, 20a, 20b), which are connected to the drive element (22) for conjoint rotation, perform a reciprocating shaking movement (25), which is directed at the plants, in a horizontal plane and transversely to its longitudinal extent, **characterized in that** the connection for conjoint rotation between the drive element (22) and the first end of the respective shaking rod (20, 20a, 20b) is designed as a releasable locking mechanism, which is remotely actuable by means of hydraulically, electromechanically or electromagnetically driven actuators (30, 41, 49), of a rotatable mounting of the shaking rod (20, 20a, 20b) about the longitudinal axis (23) of the drive element (22), the shaking rod (20, 20a, 20b) being fixable relative to the drive element (22).

2. Harvesting device (2) according to Claim 1, in which the connection for conjoint rotation is designed as a locking mechanism, which is activatable by means of actuators (30, 41, 49), of a holding plate (29, 37, 46), which is rotatably or pivotably mounted about the longitudinal axis (23) of the drive element (22) and is provided at the drive-side end of the shaking rod (20, 20a, 20b), the locking mechanism enabling the holding plate (29, 37, 46) to be fixable relative to the drive element (22).

3. Harvesting device (2) according to Claim 2, in which an actuator (30, 41, 49) is provided which is coupled to the drive element (22) and acts on the holding plate (29, 37, 46) in such a way that the holding plate (29, 37, 46) is pivotable by the actuator (30, 41, 49) into a locking position blocking its rotatable mounting and is fixable there, preferably is pivotable into a form fit and/or force fit between the holding plate (29, 37, 46) and drive element (22).

4. Harvesting device (2) according to Claim 3, in which the actuator (30, 41, 49) is designed as a hydraulic cylinder (30) which is coupled to the drive element (22) and by means of the piston (33) of which the holding plate (29, 37, 46) is pivotable into a locking position blocking its rotatable mounting.

5. Harvesting device (2) according to Claim 2, in which an actuator (30, 41, 49) is provided which is coupled at one end to the drive element (22) and at the other end to a first end of a coupling member (38, 47), wherein the coupling member (38, 47) at its second end is also coupled to the drive element (22) and the coupling member (38, 47) or part of a joint connection (40) between the drive element (22) and the coupling member (38, 47), which part is connected to the coupling member, is pivotable by the actuator (30, 41, 49) into a locking position blocking the rotatable mounting of the holding plate (29, 37, 46) and fixing the holding plate (29, 37, 46), preferably into a form fit and/or force fit between the holding plate (29, 37, 46) and the coupling member (38, 47) or that part of the joint connection (40) which is connected to the drive element (22).

6. Harvesting device (2) according to Claim 5, in which the actuator (30, 41, 49) is designed as a motor (41) which is coupled to the drive element (22) and acts linearly on the coupling member (38, 47), as a result of which the coupling member (38, 47) is pivotable into the locking position.

7. Harvesting device (2) according to Claim 5 or 6, in which the fixing of the holding plate (29, 37, 46) in the locking position can be produced by the coupling member (38, 47) bearing under compression loading via the actuator (30, 41, 49) against the holding plate (29, 37, 46) .

8. Harvesting device (2) according to Claim 2, in which a coupling member (38, 47) is provided which is coupled at its first end to a holding plate (29, 37, 46), is pivotable in the direction of the drive element (22) and at its second end is fixable in a locking position to the drive element (22), wherein, in the locking position of the coupling member (38, 47), the rotatable mounting of the holding plate (29, 37, 46) is blockable and the holding plate (29, 37, 46) is fixable.

9. Harvesting device (2) according to Claim 8, in which the coupling member (38, 47) is fixable in the locking position by a latching or holding element (48) which engages in the coupling member (38, 47) and is actuable by an actuator (30, 41, 49) arranged on the drive element.

10. Harvesting device (2) according to Claim 8 or 9, in which the latching or holding element (48) is designed as a latching bolt which is actuable by the tension or pressure rod of an electromagnet (49) arranged on the drive element (22) and which engages in the coupling member (38, 47).

11. Harvesting device (2) according to any one of Claims 1 to 10, in which the drive element (22) is designed as an elongate profile extending over all the shaking rods (20, 20a, 20b) and is drivable at one end in an oscillating rotational movement (24) over a certain angular range by an eccentric drive via a coupling lever or connecting rod.

12. Harvesting device (2) according to any one of Claims 1 to 11, in which the shaking rods (20, 20a, 20b) are elastically flexible and are mounted on both sides in the harvesting device (2), wherein the rod end (27) opposite the drive element (22) is mounted in the frame via a coupling rod in the form of a movable handlebar (28).

13. Harvesting device (2) according to any one of Claims 1 to 12, in which, at the front end of the harvesting device (2) in the direction of travel or working direction (9), the drive element (22) is mounted rotatably in said harvesting device.

14. Harvesting device (2) according to any one of Claims 1 to 13, in which the harvesting device (2) and the chassis of the receiving vehicle are designed in the form of a gantry (3) which extends over the respective row of plants to be processed, and the harvesting device is provided with mutually opposite arrangements of horizontally oriented elongate shaking rods (20, 20a, 20b) in such a way that the latter are located on the left and right of a row of plants and perform a reciprocating horizontal shaking movement (25), which is directed at the plant(s), transversely to the direction of travel.

## Revendications

1. Dispositif de récolte (2) prévu pour être agencé sur un véhicule (1) pour des plantes portant des fruits, notamment pour des vignes sur des ceps plantés en rangées, le dispositif de récolte (2) étant réalisé de manière à pouvoir être déplacé dans la direction de déplacement et de travail le long des plantes portant des fruits et présentant plusieurs barres de secouage (20, 20a, 20b) s'étendant parallèlement à la direction de déplacement (9) et agencées à distance les unes au-dessus des autres, les barres de secouage étant reliées chacune à une première extrémité, de manière solidaire en rotation, à un élément d'entraînement (22) qui, de son côté, est monté dans le dispositif de récolte (2) de manière à pouvoir tourner autour de son axe longitudinal (23) et s'étend verticalement le long de plusieurs barres de secouage (20, 20a, 20b), l'élément d'entraînement (22) pouvant être entraîné dans un mouvement de rotation (24) oscillant autour de son axe longitudinal (23) sur une plage angulaire déterminée, moyennant quoi les barres de secouage (20, 20a, 20b) reliées de manière solidaire en rotation à l'élément d'entraînement (22) exécutent dans un plan horizontal et transversalement à leur extension longitudinale un mouvement de secouage (25) en va-et-vient dirigé vers la plante, **caractérisé en ce que** la liaison solidaire en rotation entre l'élément d'entraînement (22) et la première extrémité de la barre de secouage (20, 20a, 20b) respective est réalisée sous la forme d'un verrouillage amovible, pouvant être actionné à distance au moyen d'actionneurs (30, 41, 49) à entraînement hydraulique, électromécanique ou électromagnétique, d'un logement rotatif de la barre de secouage (20, 20a, 20b) autour de l'axe longitudinal (23) de l'élément d'entraînement (22), la barre de secouage (20, 20a, 20b) pouvant être fixée par rapport à l'élément d'entraînement (22).

2. Dispositif de récolte (2) selon la revendication 1, dans lequel la liaison solidaire en rotation est réalisée sous la forme d'un verrouillage, pouvant être activé à l'aide d'actionneurs (30, 41, 49), d'une plaque de retenue (29, 37, 46) montée de manière à pouvoir tourner ou pivoter autour de l'axe longitudinal (23) de l'élément d'entraînement (22) et prévue à l'extrémité côté entraînement de la barre de secouage (20, 20a, 20b), le verrouillage permettant de fixer la plaque de retenue (29, 37, 46) par rapport à l'élément d'entraînement (22).

3. Dispositif de récolte (2) selon la revendication 2, dans lequel il est prévu un actionneur (30, 41, 49) articulé sur l'élément d'entraînement (22) et agissant sur la plaque de retenue (29, 37, 46) de telle sorte que la plaque de retenue (29, 37, 46) peut être pivotée par l'actionneur (30, 41, 49) dans une position de verrouillage bloquant son montage rotatif et peut y être fixée, de préférence peut être pivotée dans une liaison par complémentarité de forme et/ou par adhérence entre la plaque de retenue (29, 37, 46) et l'élément d'entraînement (22).

4. Dispositif de récolte (2) selon la revendication 3, dans lequel l'actionneur (30, 41, 49) est réalisé sous la forme d'un vérin hydraulique (30) articulé sur l'élément d'entraînement (22), dont le piston (33) permet de faire pivoter la plaque de retenue (29, 37, 46) dans une position de verrouillage bloquant son montage rotatif.

5. Dispositif de récolte (2) selon la revendication 2, dans lequel il est prévu un actionneur (30, 41, 49) articulé d'une part sur l'élément d'entraînement (22) et d'autre part sur une première extrémité d'un organe de couplage (38, 47), l'organe de couplage (38, 47) étant également articulé sur l'élément d'entraînement (22) à sa deuxième extrémité et l'organe de couplage (38, 47) ou une partie reliée à celui-ci d'une liaison articulée (40) entre l'élément d'entraînement (22) et l'organe de couplage (38, 47) pouvant être pivotée par l'actionneur (30, 41, 49) dans une position de verrouillage bloquant le montage rotatif de la plaque de retenue (29, 37, 46) et fixant la plaque de retenue (29, 37, 46), de préférence dans une liaison par complémentarité de forme et/ou par adhérence entre la plaque de retenue (29, 37, 46) et l'organe de couplage (38, 47) ou la partie de la liaison articulée (40) reliée à l'élément d'entraînement (22).

6. Dispositif de récolte (2) selon la revendication 5, dans lequel l'actionneur (30, 41, 49) est réalisé sous la forme d'un moteur (41) articulé sur l'élément d'entraînement (22) et agissant linéairement sur l'organe de couplage (38, 47), ce qui permet de faire pivoter l'organe de couplage (38, 47) dans la position de verrouillage.

7. Dispositif de récolte (2) selon la revendication 5 ou 6, dans lequel la fixation de la plaque de retenue (29, 37, 46) dans la position de verrouillage peut être produite par un appui de l'organe de couplage (38, 47) sur la plaque de retenue (29, 37, 46), sollicité en pression par l'actionneur (30, 41, 49).

8. Dispositif de récolte (2) selon la revendication 2, dans lequel il est prévu un organe de couplage (38, 47) articulé à sa première extrémité sur une plaque de retenue (29, 37, 46), pouvant pivoter en direction de l'élément d'entraînement (22) et pouvant être fixé à sa deuxième extrémité sur l'élément d'entraînement (22) dans une position de verrouillage, le montage rotatif de la plaque de retenue (29, 37, 46) pouvant être bloqué et la plaque de retenue (29, 37, 46) pouvant être fixée dans la position de verrouillage de l'organe de couplage (38, 47).

9. Dispositif de récolte (2) selon la revendication 8, dans lequel l'organe de couplage (38, 47) peut être fixé dans la position de verrouillage par un élément d'encliquetage ou de retenue (48) qui s'engage dans l'organe de couplage (38, 47) et qui peut être actionné par un actionneur (30, 41, 49) agencé sur l'élément d'entraînement.

10. Dispositif de récolte (2) selon la revendication 8 ou 9, dans lequel l'élément d'encliquetage ou de retenue (48) est réalisé sous la forme d'un boulon d'encliquetage pouvant être actionné par la barre de traction ou de compression d'un électroaimant (49) agencé sur l'élément d'entraînement (22) et s'engageant dans l'organe de couplage (38, 47).

11. Dispositif de récolte (2) selon l'une quelconque des revendications 1 à 10, dans lequel l'élément d'entraînement (22) est réalisé sous la forme d'un profilé allongé s'étendant sur toutes les barres de secouage (20, 20a, 20b) et peut être entraîné à une extrémité par un levier de couplage ou une bielle avec un entraînement excentrique sur une plage angulaire déterminée dans un mouvement de rotation oscillant (24).

12. Dispositif de récolte (2) selon l'une quelconque des revendications 1 à 11, dans lequel les barres de secouage (20, 20a, 20b) sont réalisées sous forme flexible élastiquement et sont montées des deux côtés dans le dispositif de récolte (2), l'extrémité de barre (27) opposée à l'élément d'entraînement (22) étant montée dans le cadre par l'intermédiaire d'une tige de couplage sous la forme d'une biellette mobile (28).

13. Dispositif de récolte (2) selon l'une quelconque des revendications 1 à 12, dans lequel l'élément d'entraînement (22) à l'extrémité avant du dispositif de récolte (2) dans la direction de déplacement ou dans la direction de travail (9) est monté rotatif dans ce dernier.

14. Dispositif de récolte (2) selon l'une quelconque des revendications 1 à 13, dans lequel le dispositif de récolte (2) et le châssis du véhicule de réception sont réalisés sous la forme d'un portique (3) recouvrant la rangée de plantes respective à traiter et le dispositif de récolte est pourvu d'agencements opposés de barres de secouage allongées (20, 20a, 20b) orientées horizontalement de telle sorte que ces dernières se trouvent à gauche et à droite d'une rangée de plantes et exécutent un mouvement de secouage horizontal (25) en va-et-vient orienté vers la ou les plantes, transversalement à la direction de déplacement.
